# EUROPEAN PATENT SPECIFICATION

(11) **EP 1 460 342 B1**
(45) Date of publication and mention of the grant of the patent: **31.05.2006**
(21) Application number: 03257336.2
(22) Date of filing: 20.11.2003
(51) Int. Cl.: F24C 15/16, F24C 7/06

(54) **Cooking Apparatus**
Kochvorrichtung
Appareil de cuisson

(30) Priority: 21.03.2003 KR 2003017753
(43) Date of publication of application: 22.09.2004
(73) Proprietor: SAMSUNG ELECTRONICS CO., LTD., Suwon-City, Kyungki-do (KR)
(72) Inventor: Shozo, Kobayashi, Paldal-Gu, Suwon-City Kyungki-Do (KR); Hoh, Jung-Eui, Kwonsun-Gu, Suwon-City Kyungki-Do (KR); Hwang, Yun-Ic, Paldal-Gu, Suwon-City Kyungki-Do (KR); Cho, Pung-Yeun, Paldal-Gu, Suwon-City Kyungki-Do (KR); Ko, Dong-Wok, Suwon-City, Kyungki-Do (KR); Kim, Kwang-Keun, Kuro-Gu Seoul-City (KR)
(74) Representative: Robinson, Ian Michael

(56) References cited:
- EP-A- 0 298 567
- EP-A- 0 641 976
- FR-A- 2 581 165
- US-B1- 6 362 458

## Description

The present invention relates to a cooking apparatus, and more particularly to a cooking apparatus which improves heating efficiency.

Generally, a cooking apparatus includes a cooking cavity to receive foods to be cooked, and a heating device installed in the cooking cavity or in an additional compartment isolated from the cooking cavity. For example, a microwave oven, which is a kind of cooking apparatus, includes a cooking cavity defining a space for cooking foods therein, and a machine room isolated from the cooking cavity having a magnetron generating microwaves. The microwaves are then introduced into the cooking cavity to cook the food.

In microwave ovens, where cooking is performed by only the microwaves from the magnetron, it is difficult to achieve a satisfactory cooking result because food is not evenly irradiated with the microwaves due to factors such as water content, distribution, and size of the food. Further, it is impossible to perform various kinds of cooking. To overcome such problems in conventional microwave ovens, a microwave oven has been proposed, in which the cooking cavity includes upper and lower heaters, to quickly and evenly cook food in the cooking cavity by heat generated from the upper and lower heaters as well as microwaves generated from the magnetron and to allow various kinds of cooking to be performed.

In the microwave oven with the upper and lower heaters, when the upper and lower heaters are turned on after a tray, on which food is placed, is received in the cooking cavity between the upper and lower heaters, the food can be cooked by heat generated from the upper and lower heaters, as in a grill oven.

However, in a conventional cooking apparatus provided with a plurality of heaters in its cooking cavity, the cooking cavity is not only reduced in its capacity but also complicated in its structure, thereby precluding efficient employment of the cooking cavity and increasing production cost and time.

In addition, in the conventional cooking apparatus, a tray in a cooking cavity is separated from a lower heater, so that heat generated from the lower heater must be transmitted to the food through the tray. Thus, heating efficiency is decreased and sufficient heat energy cannot be transmitted to a lower surface of the food, thereby increasing electric power consumption. Furthermore, since the amount of heat energy transmitted to upper and lower parts of the food are different from each other, the food must be periodically turned over to evenly cook upper and lower parts of the food, thereby causing the user inconvenience. Moreover, since a temperature at a part of the microwave oven around the lower heater becomes very high, a cooling fan operating at a high speed must be provided in the microwave oven to cool the heated part, thereby causing unpleasant noise due to the high-speed operation of the cooling fan.

Additionally, since a tray disposed to be spaced from a lower heater of the conventional cooking apparatus has uneven temperature distribution between its upper surface and its lower surface facing a lower heater, food placed on the tray is not evenly cooked.

EP-A-0,298,567 discloses a tray for an oven comprising upper and lower metal sheets having a heating foil located therebetween, wherein the heating foil includes a resistive heating element arranged within an insulating material. This document forms the pre-characterising portion of the claims appended hereto.

It is an aim of the present invention to provide a cooking apparatus, which is designed to increase heating efficiency and to quickly cook foods.

It is another aim of the present invention to provide a cooking apparatus, having an increased effective space for its cooking cavity and which has a simplified structure for its cooking cavity.

It is a further aim of the present invention to provide a cooking apparatus, which allows food to be evenly cooked and does not require that food be turned over during cooking.

Other aims and advantages of the invention will be set forth in part in the description which follows and, in part, will be obvious from the description, or may be learned by practice of the invention.

The present invention provides a microwave oven which includes a socket for power supply provided at a rear wall of its cooking cavity and a tray having a heater therein so as to cause the tray to generate heat by the heater.

According to the present invention there is provided an apparatus as set forth in the appended claims. Preferred features of the invention will be apparent from the dependent claims, and the description which follows.

In one aspect of the present invention there is provided a cooking apparatus comprising: a cooking cavity; at least one pair of support rails respectively included at both side walls of the cooking cavity; a tray on which food is placed; a heater to directly heat the tray to cook the food by activation of the heater, having a pair of terminals; and at least one socket included at a rear wall of the cooking cavity allowing electric power to be supplied to the heater when connected to the terminals; characterised in that: the heater comprises: a conductive film coated on a lower surface of the tray; and first and second opposing electrodes connected to the conductive film, the conductive film heating as a result of electric current flowing through the conductive film between the first and second electrodes.

Preferably, each of the first and second electrodes may be divided at its center portion, and both the divided electrode segments may be spaced from each other by a certain distance with a conductive wire connected therebetween, in order to prevent a center area of the conductive film from being heated more than its peripheral area.

Preferably, each of the first and second electrodes may be bent outward to have an arched shape, in order to prevent a center area of the conductive film from being heated more than its peripheral area.

The pair of terminals may be positioned at a side of the tray such that inner ends of the terminals are connected to the first and second electrodes and outer ends of the terminals are outwardly projected from the tray. Thus, when the tray is pushed into the cooking cavity along the support rails, the pair of terminals insert into the socket corresponding to the support rails to allow the tray to be heated by electric current flowing through the conductive film between the first and second electrode.

The lower surface of the tray may be covered with a cover plate to prevent the heater attached to the tray from being exposed.

Each of the pair of terminals may be surrounded with an insulating sheath except at its opposite ends, and the lower surface of the tray and the cover plate may be provided with a pair of grooves, respectively, to define a pair of holes, in which the pair of terminals are received.

Sealing material may be applied to the grooves of the tray and the cover plate so as to prevent moisture from infiltrating into the heater through the grooves.

The at least one pair of support rails may include a plurality of pairs of support rails, which are positioned at both side walls of the cooking cavity to be vertically spaced from one another by a certain distance. The at least one socket may include a plurality of sockets, which are positioned at the rear wall of the cooking cavity to correspond to the plurality of pairs of support rails.

The cooking apparatus may include an upper heater fixed to an upper portion of the rear wall of the cooking cavity to cook food in cooperation with the heater provided at the tray.

Each of the plurality of sockets may include a micro switch, which is turned on and off when the terminals are inserted into and separated from one of the sockets, to control electric current supplied to the heater by registering which of the sockets the heater is inserted into.

The tray may include a bottom plate and a side wall upwardly extended from a peripheral edge of the bottom plate, and the heater may be positioned on a lower surface of the bottom plate.

The cooking apparatus may include a grill plate placed on an upper end of the tray. The side wall of the tray may include a stepped portion at a predetermined height of its inner surface, which serves as a water level mark. Thus, when the heater of the tray is activated after the tray containing water filled up to the stepped portion and having the grill plate with food placed thereon being, the food on the grill plate is cooked in the cooking cavity by steam generated from the water contained in the tray.

For a better understanding of the invention, and to show how embodiments of the same may be carried into effect, reference will now be made, by way of example, to the accompanying diagrammatic drawings in which:
Figure 1 is a perspective view of a cooking apparatus according to an embodiment of the present invention including a tray having a heater;
Figure 2 is a cross-sectional view taken along line II-II of Figure 1;
Figure 3 is a cross-sectional view taken along line III-III of Figure 1;
Figure 4 is a cross-sectional view taken along line IV-IV of Figure 3;
Figure 5 is a fragmentary perspective view of a tray on which terminals are provided to supply electric power to a heater in the tray;
Figure 6 is a cross-sectional view showing the terminals inserted in a socket provided at a rear wall of a cooking cavity;
Figure 7 is a cross-sectional view taken along line VII-VII of Figure 6;
Figure 8 is a perspective view of the cooking apparatus according to the present invention, in which the tray includes a grill plate to perform a grilling operation; and
Figure 9 is a cross-sectional view taken along line IX-IX of Figure 8, in which the tray contains water to perform a grilling operation.

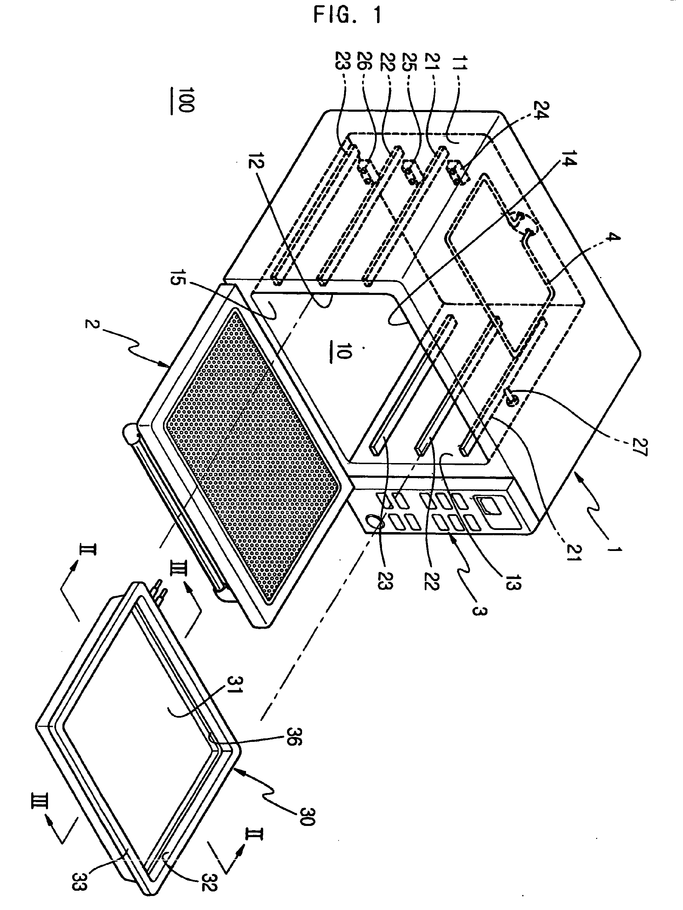

Figure 1 is a perspective view showing a cooking apparatus 100 according to an embodiment of the present invention, which is provided with a tray having a heater therein. The cooking apparatus 100 includes a cabinet 1 providing an appearance of the cooking apparatus 100, a cooking cavity 10 in the cabinet 1, a door 2 to open and close a front face of the cooking cavity 10, and a control panel 3 attached to a front face of the cabinet 1 adjacent to the door 2.

The cooking cavity 10 is defined by a rear wall 11, left and right walls 12 and 13, a top wall 14, and a bottom wall 15. The cooking cavity 10 is provided with a heater 4 close to the top wall 14 at the rear wall 11, to emit high-temperature heat downwardly.

The left and right walls 12 and 13 of the cooking cavity 10 are provided with a pair of upper support rails 21, a pair of intermediate support rails 22 and a pair of lower support rails 23, which are spaced from each other by a certain distance. The rear wall 11 of the cooking cavity 10 is provided with an upper socket 24, an intermediate socket 25, and a lower socket 26, which are positioned just below the upper, intermediate and lower support rails 21, 22 and 23, respectively.

Although the support rails 21, 22, and 23 and the sockets 24, 25, and 26 are described to be disposed at an upper position, an intermediate position and a lower position of the cooking cavity, the number and the position of the support rails 21, 22, and 23 and the sockets 24, 25, and 26 may be changed depending on a size of the cooking cavity.

The right wall 13 of the cooking cavity 10 is further provided with a temperature sensor 27 to detect a temperature in the cooking cavity 10 and thus control cooking of food in the cooking cavity 10.

A tray 30 according to the present invention, on which food is placed, is easily received in the cooking cavity 10.

The tray 30 includes a bottom plate 31 and an integral side wall 32 upwardly extended from a peripheral edge of the bottom plate 31 to have a substantially rectangular form. The side wall 32 is integrally provided at its upper end with a flange 33 extended outwardly by a certain length. Accordingly, the tray 30, on which food is placed, can be easily supported by any one pair of support rails 21, 22, and 23 among the upper, intermediate and lower support rails 21, 22 and 23 formed at the left and right walls 12 and 13, so as to cook the food in the cooking cavity 10.

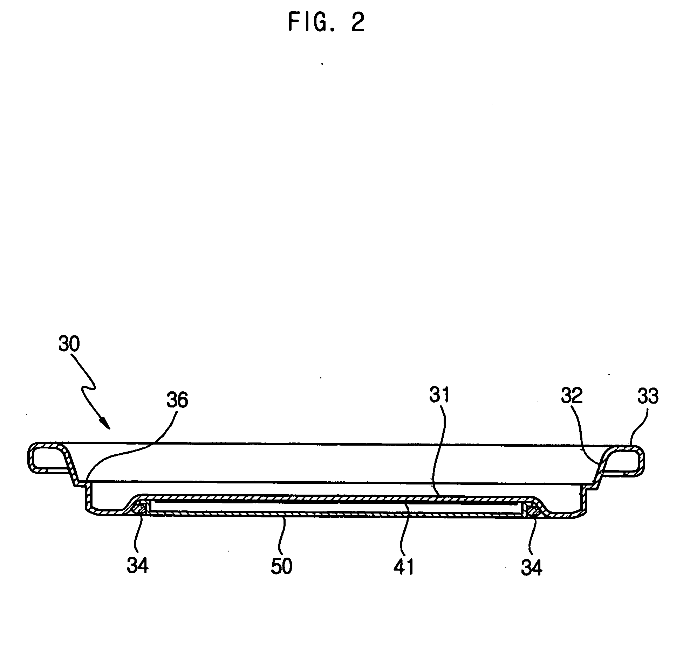

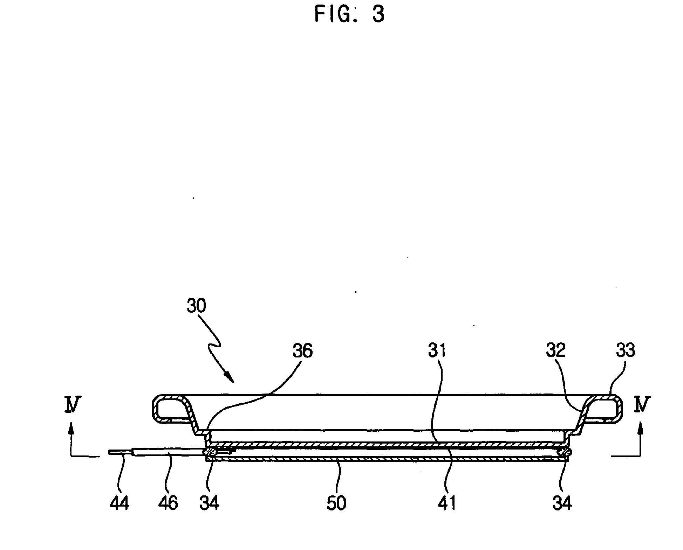

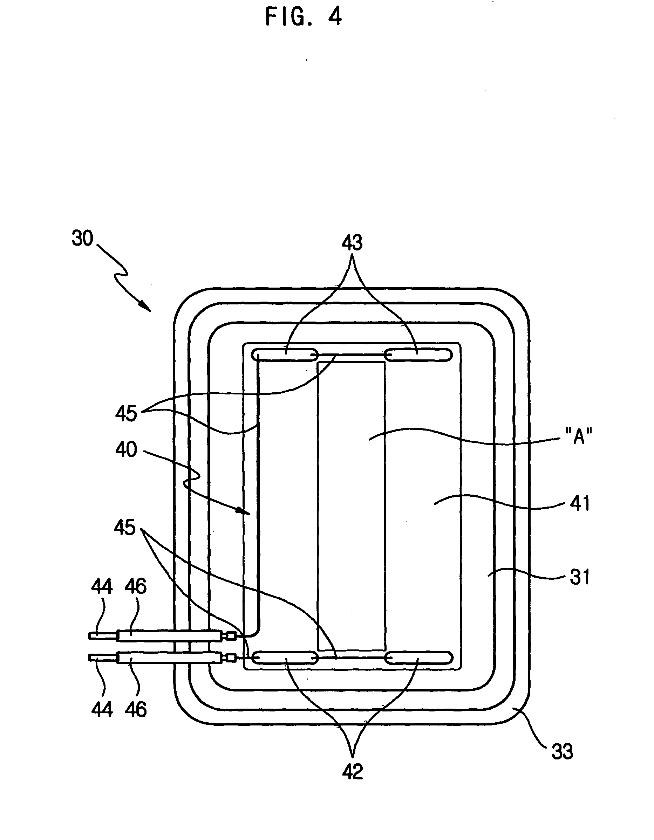

Figures 2 and 3 are side cross-sectional views showing a heater installed on an underside of the tray, which serves to cook food on the tray in cooperation with an upper heater fixedly installed on an upper portion of the cooking cavity, in which Figure 2 is a cross-sectional view taken along line II-II of Figure 1, and Figure 3 is a cross-sectional view taken along line III-III of Figure 1. Figure 4 is a cross-sectional view taken along line IV-IV of Figure 3.

As shown in Figures 2 through 4, the tray 30 includes a heater 40 shown in Figure 4, at its bottom plate 31, which is formed into a plate-shape to provide a heating surface. The heater 40 includes a thin conductive film 41 coated on its underside, first and second electrodes 42 and 43 disposed at both sides of the conductive film 41 to face each other, as shown in Figure 4, and a pair of terminals 44 shown in Figures 3 and 4, connected to the first and second electrodes 42 and 43 to allow electric power to be supplied to the heater 40.

The conductive film 41 is produced from material, which allows electric current to flow between the first and second electrodes 42 and 43 through the shortest path, to generate heat by itself, and radiate the heat. Accordingly, the overall bottom plate 31 of the tray 30 on which the conductive film 41 is coated serves as a heating surface.

The first electrodes 42 and the second electrodes 43 are electrically connected to the terminals 44. Consequently, when the terminals 44 are inserted in any one of the sockets 24, 25 and 26 of the cooking cavity 10 allowing external electric power to be supplied to the heater 40, the electric current flows between the first and second electrodes 42 and 43 through the conductive film 41. This causes the conductive film 41 to generate heat.

At this point, the center area "A" between the first and second electrodes 42 and 43 is heated to a relatively high temperature due to concentration of heat, compared to the remaining areas, thereby causing the bottom plate 31 of the tray 30 to be unevenly heated. To solve this problem, as shown in Figure 4, each of the first and second electrodes 42 and 43 is divided into two electrodes to be spaced from each other by a certain distance. By the above-described structure, the center area "A" of the conductive film 41 is heated by heat transmitted from its surrounding areas, thereby allowing the conductive film 41 to be evenly heated to a high temperature.

Alternatively, the center area "A" of the conductive film 41 may be evenly heated without the division of each of the first and second electrodes 42 and 43. In one of many alternative embodiments, each of the first and second electrodes 42 and 43 is bent outward to have an arched shape (not shown). Thus, a distance between the first and second electrodes 42 and 43 is increased at the center potion of the electrodes, compared to the structure at end portions of the electrodes. Accordingly, flow of electric current is relatively weakened at the center area "A" of the conductive film 41, thereby causing the conductive film 41 to be evenly heated.

It is understood that there are many other arrangements of the first and second electrodes 42 and 43 which would provide even heating of the conductive film 41.

The terminals 44 are positioned on the underside of the tray 30 such that inner ends of the terminals 44 are connected to the first and second electrodes 42 and 43 and outer ends of the terminals 44 are projected from the tray 30. Therefore, when the outer ends of the terminals 44 are inserted into any one of the sockets 24, 25 and 26 installed on the rear wall 11 of the cooking cavity 10, the first and second electrodes 42 and 43 are supplied with electric power. The terminals 44 are surrounded with insulating sheaths 46 to prevent electricity leakage.

With reference to Figure 2, the tray 30 includes a cover plate 50 at its lower surface covering the heater 40 so as to protect the heater 40 from external impact. The cover plate 50 is attached to the lower surface of the tray 30 by sealing material 34 such as silicon. Accordingly, by attaching the cover plate 50 to the tray 30, the conductive film 41 and the first and second electrodes 42 and 43 can be protected from infiltration of moisture and from breakage by external impact.

As such, since the heater 40 according to the present invention is comprised of the conductive film 41, the first and second electrodes 42 and 43, and the terminals 44, the heater 40 can be remarkably decreased in its thickness and weight, thereby preventing considerable increase of overall thickness and weight of the tray 30. Furthermore, since the heater 40 is directly attached to the tray 30 so as to permit the tray 30 to generate heat by itself to cook food placed thereon, heating efficiency is considerably improved and power consumption is reduced.

The tray 30 having the heater 40 installed thereon is made of metallic material having excellent heat transfer properties, such as aluminum and stainless steel. Among the metallic materials, it is more preferable to use stainless steel in view of heat resistance.

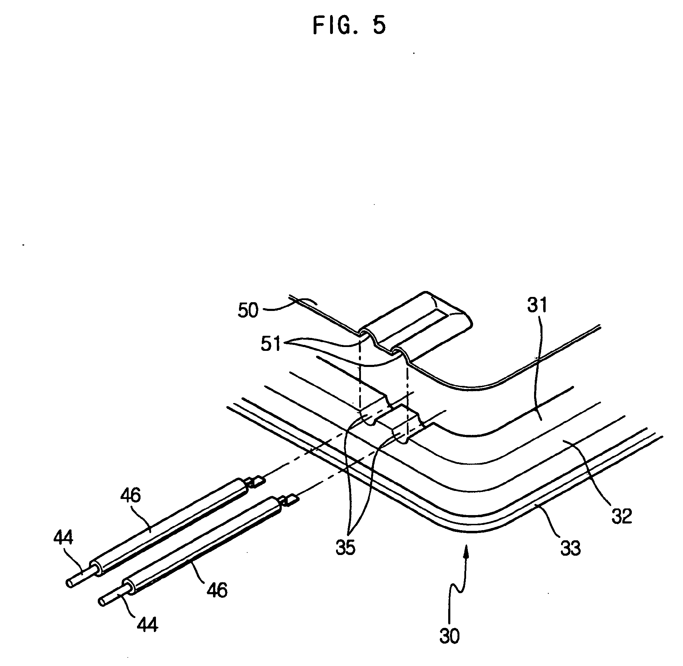

A structure allowing the terminals 44 of the tray 30 having the heater 40 to be inserted into any one of the sockets 24, 25 and 26 provided at the cooking cavity 10 will now be described with reference to Figures 5 through 7.

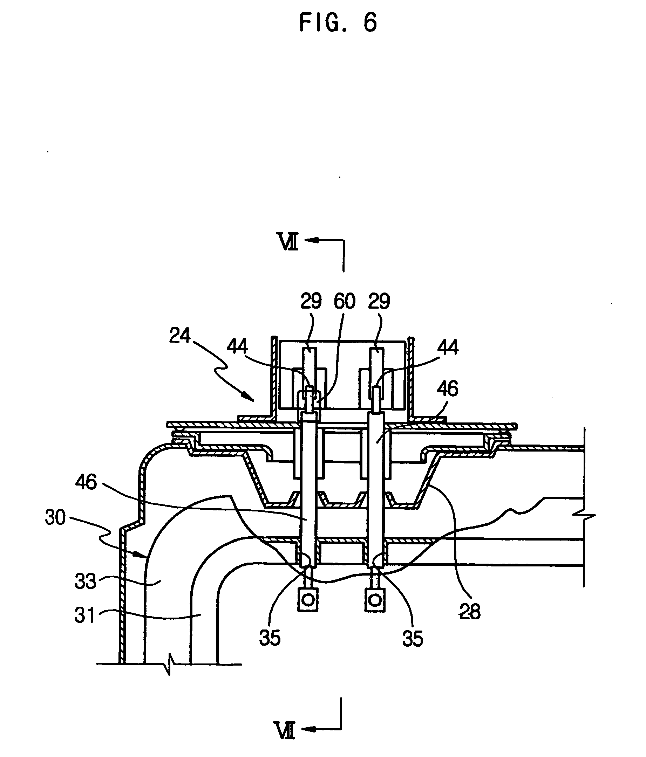

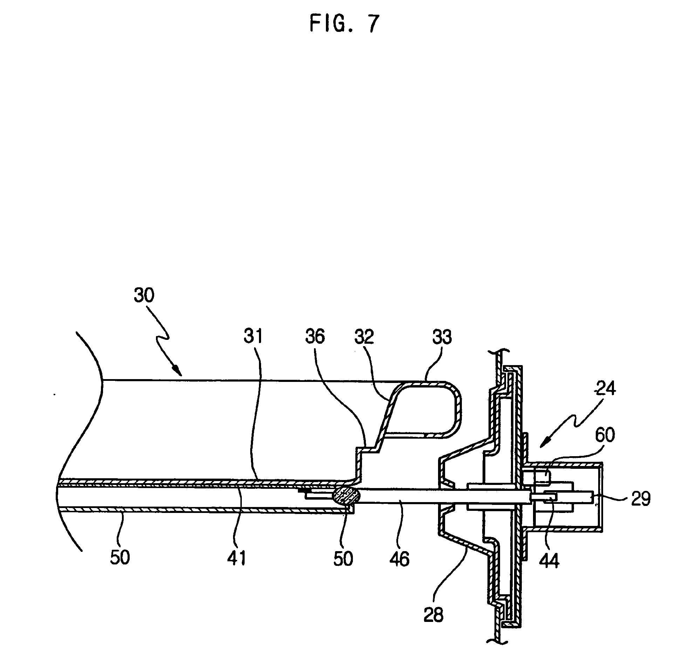

Figure 5 is a fragmentary perspective view showing a part of the tray 30 in which the terminals 44 are installed to allow external power to be supplied to the heater. Figure 6 is a cross-sectional view showing the terminals 44 inserted in the socket. Figure 7 is a cross-sectional view taken along line VII-VII of Figure 6.

As shown in Figure 5, in order to install the terminals 44 of the heater 40, the tray 30 is provided at its lower surface with a pair of semi-circular grooves 35. The cover plate 50 is provided with a pair of semi-circular grooves 51 at its portion corresponding to the semi-circular grooves 35 of the tray 30. Therefore, two holes defined between the semi-circular grooves 35 of the tray 30 and the semi-circular grooves 51 of the cover plate 50 receive the insulating sheaths 46 attached to outer surfaces of the terminals 44. Inner ends of the terminals 44 are attached to a lower surface of the bottom plate 31 of the tray 30 by spot welding, so as to connect the terminals 44 to the first and second electrodes 42 and 43. Outer ends of the terminals 44 are extended from the tray 30 together with a part of the insulating sheaths 46 surrounding the terminals 44, to enable the terminals 44 to be inserted into any one of the sockets 24, 25 and 26.

Sealing material is applied to a gap between the terminals 44 and the semi-circular grooves 35 and 51 so as to prevent water or foreign substances from infiltrating into the heater 40 through the gap.

As shown in Figures 6 and 7, the socket 24 includes a guide cover 28 protruded from the rear wall 11 of the cooking cavity 10 to guide insertion of the terminals 44 of the heater 40 (sockets 25 and 26 are similarly constructed but not shown). Socket terminals 29 are provided in the guide cover 28 and connected to the inserted terminals 44 of the heater 40 to allow external power to be supplied to the heater 40. Each of the sockets 24, 25 and 26 is provided in the guide cover 28 with a micro switch 60, which is turned on and off when the terminals 44 of the heater 40 are inserted into and separated from the one socket. Accordingly, the cooking apparatus 100 can register which of the support rails 21, 22 and 23 the tray 30 is placed on, and can thus control current supplied to the heater 40.

More specifically, where the tray 30 is placed on the upper support rails 21, and the terminals 44 of the heater 40 are inserted into the upper socket 24, for the purpose of cooking of a small sized food, the tray 30 is positioned at a level closest to the upper heater 4 installed on the top wall of the cooking cavity 10. Consequently, even if the heater 40 of the tray 30 is applied with relatively little electric power, the food placed on the tray 30 can be quickly cooked.

Where the tray 30 is placed on the intermediate support rails 22, and the terminals 44 of the heater 40 are inserted into the intermediate socket 25, for the purpose of cooking of a moderate sized food, the tray 30 is positioned at a level moderately remote from the upper heater 4. Consequently, the heater 40 of the tray 30 is applied with moderate electric power to cook the food placed on the tray 30.

Finally, where the tray 30 is placed on the lower support rails 23, and the terminals 44 of the heater 40 are inserted into the lower socket 26, for the purpose of cooking of a large sized food, the tray 30 is positioned at a level farthest from the upper heater 4. In this case, the heater 40 of the tray 30 is applied with high electric power to cook the large sized food placed on the tray 30.

In another embodiment, the cooking apparatus 100 is provided with a manual cooking temperature adjustment system. This would allow the user to cook foods with varying sizes at varying temperature. For instance, a food, such as a steak requiring little space and high cooking temperatures could be cooked on the upper support rails.

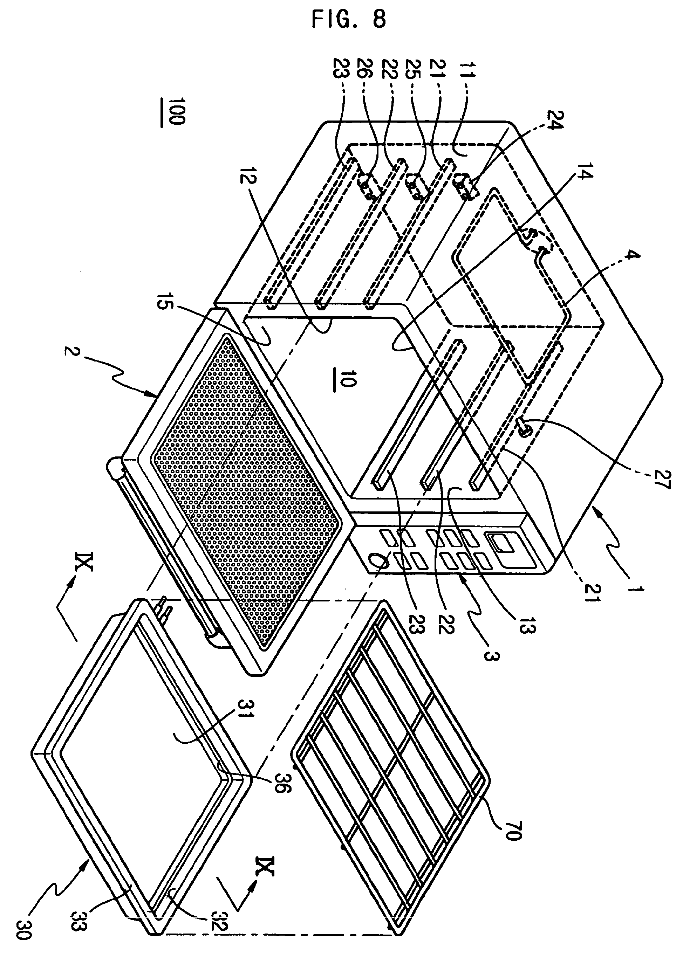

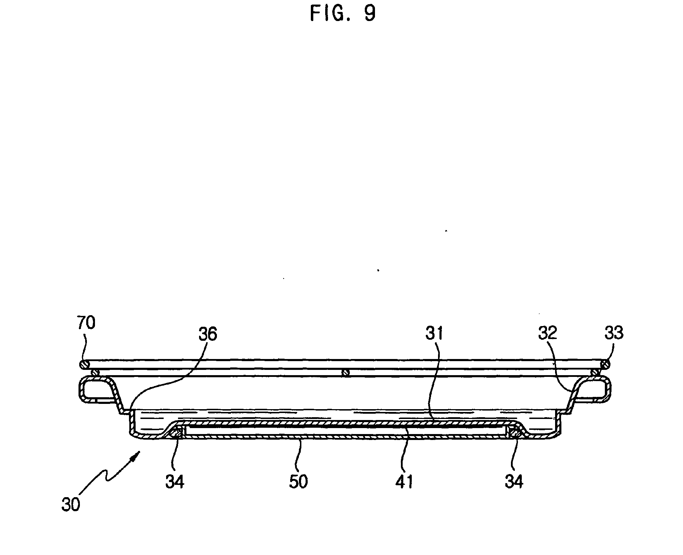

An operation of steaming food according to the present invention will now be described with reference to Figures 8 and 9.

As described above, since the cooking apparatus 100 according to the present invention is designed to cook food by heat evenly generated through the bottom plate 31 of the tray 30 from the heater 40 attached to the bottom plate 31, the tray 30 may be used as a steaming container to steam food.

As shown in Figures 8 and 9, the tray 30 includes a stepped portion 36 formed at an inner surface of the side wall 32, and a grill plate 70 to be placed on an upper side of the tray 30. The tray 30 is first filled with water up to the stepped portion 36 serving as a water level mark, and the grill plate 70 is placed on the upper side of the tray 30 with food placed on the grill 70. The tray 30 is placed on one pair of support rails, which is selected among the support rails 21, 22 and 23 according to a size of the food, and then pushed into the cooking cavity 10. As the tray 30 is pushed into the cooking cavity 10, the terminals 40 of the heater 40 attached to the tray 30 are inserted into the socket corresponding to the selected support rails, thereby allowing electric power to be supplied to the heater 40.

With the supply of electric power, the heater 40 activates and causes the conductive film 41 to generate heat, and thus the bottom plate 31 of the tray 30 is evenly heated. Accordingly, the water contained in the tray 30 is vaporized by the heated bottom plate 31, thereby steaming the food placed on the grill plate 70.

As such, since the cooking apparatus 100 according to the present invention is constructed so the tray 30 is provided at its lower surface with the thin and light heater 40, and the heater 40 is selectively supplied with electric power from one of the sockets 24, 25 and 26, the cooking apparatus 100 may be used alone or in conjunction with another heating source such as a magnetron generating microwaves, depending on a kind and a size of food and a cooking manner.

As apparent from the above description, the present invention provides a cooking apparatus 100, which includes a tray having a heater to cook food placed on the tray in a direct heating manner. Accordingly, heating efficiency of the cooking apparatus 100 is considerably improved, and thus electric power consumption is dramatically reduced, compared to a conventional cooking apparatus.

In addition, since a tray of the cooking apparatus 100 according to the present invention is provided at its lower surface with a thin heater attached thereto, thereby dispensing with a necessity for providing an additional heater in a cooking cavity of the cooking apparatus 100, an effective cooking space in the cooking cavity is increased, and manufacturing cost and time is reduced. Additionally, it is not necessary to operate a cooling fan for cooling a lower space of the cooking cavity at high speed and for a long period of time.

Furthermore, since a tray of the cooking apparatus 100 according to the present invention is evenly heated throughout its area to directly heat food placed on the tray, a lower part of the food is quickly and evenly cooked, and a procedure of turning food over during a grilling operation is not necessary.

Additionally, since a tray of the cooking apparatus 100 according to the present invention is directly heated at its bottom plate, a steaming operation can be easily performed where the tray contains water therein.

Although a few preferred embodiments have been shown and described, it will be appreciated by those skilled in the art that various changes and modifications might be made without departing from the scope of the invention, as defined in the appended claims.

## Claims

1. A cooking apparatus comprising:
a cooking cavity (10);
at least one pair of support rails (21,22,23) respectively included at both side walls (12,13) of the cooking cavity (10);
a tray (30) on which food is placed;
a heater (40) to directly heat the tray (30) to cook the food by activation of the heater (40), having a pair of terminals (44); and
at least one socket (24,25,26) included at a rear wall (11) of the cooking cavity (10) allowing electric power to be supplied to the heater (40) when connected to the terminals (44);
**characterised in that**:
the heater (40) comprises:
a conductive (41) film coated on a lower surface of the tray (30); and
first and second opposing electrodes (42,43) connected to the conductive film (41), the conductive film (41) heating as a result of electric current flowing through the conductive film (41) between the first and second electrodes (42, 43).

2. The cooking apparatus as set forth in claim 1, wherein each of the first and second electrodes (42,43) is divided at a center portion thereof, the divided electrode segments spaced from each other by a distance with a conductive wire connected therebetween to prevent a center area of the conductive film (41) from being heated more than peripheral area thereof.

3. The cooking apparatus as set forth in claim 1 or 2, wherein each of the first and second electrodes is arch shaped, to prevent a center area of the conductive film (41) from being heated more than a peripheral area thereof.

4. The cooking apparatus as set forth in any preceding claim, wherein:
the pair of terminals (44) are positioned at a side of the tray (30) such that inner ends of the terminals (44) are connected to the first and second electrodes and outer ends of the terminals (44) are outwardly projected from the tray (30); and
when the tray (30) is pushed into the cooking cavity (10) along the support rails (21,22,23), the pair of terminals (44) are inserted into the socket (24,25,26) corresponding to the support rails (21,22,23) to allow the tray (30) to be heated by electric current flowing through the conductive film (41) between the first and second electrodes.

5. The cooking apparatus as set forth in claim 4, wherein:
each of the pair of terminals (44), except the outer end, is surrounded with an insulating sheath (46); and
the lower surfaces of the tray (30) and the cover plate (50) include a pair of grooves (35,51), respectively, to define a pair of holes, in which the pair of terminals (44) are received.

6. The cooking apparatus as set forth in claim 5, wherein sealing material is applied to the grooves of the tray (30) and the cover plate (50) to prevent moisture from infiltrating into the heater (40).

7. The cooking apparatus as set forth in any of claims 1 to 6, wherein the lower surface of the tray (30) is covered with a cover plate (50) so as to prevent the heater (40) attached to the tray (30) from being exposed.

8. The cooking apparatus as set forth in any of claims 1 to 7, wherein:
the at least one pair of support rails (21,22,23) include a plurality of pairs of support rails (21,22,23), which are positioned at both side walls (12,13) of the cooking cavity (10) to be vertically spaced from one another by a distance; and
the at least one socket (24,25,26) includes a plurality of sockets (24,25,26), which are positioned at the rear wall (11) of the cooking cavity (10) to correspond to the positions of the plurality of pairs of support rails (21,22,23).

9. The cooking apparatus as set forth in claim 8, further comprising an upper heater (4) fixed to an upper portion of the rear wall (11) of the cooking cavity (10) to cook food in cooperation with the heater (40) provided at the tray (30).

10. The cooking apparatus as set forth in claim 8 or 9, wherein each of the plurality of sockets (24,25,26) includes a micro switch (60), which is turned on and off when the terminals (44) are inserted into and separated from a corresponding one of the sockets (24,25,26), so as to control electric current supplied to the heater (40) by registering which of the sockets (24,25,26) the heater (40) is inserted into.

11. The cooking apparatus as set forth in any preceding claim, wherein the tray (30) includes a bottom plate (31) and a side wall (32) upwardly extended from a peripheral edge of the bottom plate (31), and the heater (40) is positioned on a lower surface of the bottom plate (31).

12. The cooking apparatus as set forth in claim 11, further comprising a grill plate (70) placed on an upper end of the tray (30), wherein the side wall (32) of the tray (30) includes a stepped portion (36) at a predetermined height of an inner surface thereof, wherein when the heater (40) is activated and the tray (30) is filled with water steam cooks the food.

13. The cooking apparatus as set forth in claim 1, wherein:
the cooking cavity (10) is substantially rectangular;
the heater (40) is a heating element (40);
the cooking apparatus comprises a heating system including the at least one socket (24,25,26) at a certain position within the cooking cavity (10) corresponding to a desired cooking position, the socket (24,25,26) cooperable with the pair of terminals (44) to provide power to the heating element (40);
the cooking apparatus comprising a support system (21,22,23) including the pair of support rails (21, 22, 23)which supports the heating element (40) in a position corresponding to the position of the socket (24,25,26);
the conductive film (41) being arranged to coat a lower surface of the heating element (40) such that the heating element (40) is directly attached to the tray (30) to permit the tray (30) to generate heat by itself to cook food placed thereon.

14. The cooking apparatus as set forth in claim 13, wherein the heating element (40) comprises first and second electrodes (42, 43) connected to the conductive film (41).

15. The cooking apparatus element as set forth in claim 13 or 14, wherein the first and second electrodes (42, 43) oppose each other.

16. The cooking apparatus element as set forth in claim 14 or 15, wherein electric current flowing through the conductive film (41) between the first and second electrodes (42, 43) heats the conductive film (41).

17. The cooking apparatus element as set forth in claim 14, 15 or 16 wherein each of the first and second electrodes (42, 43) is divided at a center portion.

18. The cooking apparatus element as set forth in claim 17, wherein the divided electrode segments are set apart and include a conductive wire connected therebetween.

19. The cooking apparatus element as set forth in any of claims 14 to 18, wherein each of the first and second electrodes (42, 43) is bent outward to have an arched shape.

20. The cooking apparatus element as set forth in any of claims 14 to 19, wherein inner ends of the terminals (44) are connected to the first and second electrodes (42, 43), respectively, and outer ends of the terminals (44) project outwardly.

21. The cooking apparatus element as set forth in claim 20, wherein when the heating element (40) is supported by the support system (21,22,23), the terminals (44) cooperate with the socket (24,25,26) to power the conductive film (41).

22. The cooking apparatus as set forth in claim 21, wherein the terminals (44), except for the outer end of the terminals (44), are surrounded with insulating sheaths (46).

23. The cooking apparatus as set forth in claim 22, further comprising:
a pair of semi-circular grooves in positions in the lower surface of the heating element (40); and
a cover plate (50) covering a lower surface of the heating element (40), wherein the cover plate (50) includes a pair of semi-circular grooves in position corresponding to the positions of the grooves in the lower surface of the heating element (40), wherein the grooves in the lower surface of the heating element (40) and the grooves in the cover plate (50) receive the insulating sheaths (46).

24. The cooking apparatus as set forth in claim 23, further comprising a sealing material applied to the grooves in the lower surface of the heating element (40) and the grooves in the cover plate (50) to prevent moisture from infiltrating into the heater (40).

25. The cooking apparatus as set forth in any of claims 13 to 24, wherein the support system (21,22,23) comprises a plurality of pairs of support rails (21,22,23) vertically spaced from one another by a distance.

26. The cooking apparatus as set forth in claim 25, wherein the socket (24,25,26) is plural in number and positions of the sockets (24,25,26) correspond to vertical positions of the support rails (21,22,23).

27. The cooking apparatus as set forth in claim 26, further comprising an upper heater (4) fixed to an upper portion of a rear wall (11) of the rectangular cooking space.

28. The cooking apparatus as set forth in claim 26 or 27, wherein the sockets (24,25,26) comprise micro switches turning on when the sockets (24,25,26) cooperate with the terminals (44), and off when the sockets (24,25,26) do not cooperate with the terminals (44).

29. The cooking apparatus as set forth in any of claims 13 to 28, wherein the heating element (40) comprises:
a bottom plate (31) and a side wall (32) upwardly extended from a peripheral edge of the bottom plate (31), and a conductive film (41) on a lower surface of the bottom plate (31).

30. The cooking apparatus as set forth in claim 29, wherein the heating element (40) comprises a grill plate (70) on an upper surface of the heating element (40), wherein the side wall (32) of the tray (30) includes a stepped portion (36) at a predetermined height of its inner surface, wherein when the heating element (40) is activated and having food placed on the grill plate (70), steam generated from the water contained in the tray (30) cooks the food.

## Patentansprüche

1. Kochgerät mit:
einem Garraum (10);
wenigstens einem Paar von Trageschienen (21, 22, 23), die jeweils an beiden Seitenwänden (12, 13) des Garraums (10) vorhanden sind;
einem Tablett (30), auf welchem Nahrungsmittel angeordnet werden;
einer Heizeinrichtung (40) zum direkten Heizen des Tabletts (30), um die Nahrungsmittel durch Aktivierung der Heizeinrichtung (40), welche ein Paar von Anschlüssen (44) aufweist, zu garen; und
wenigstens einer Fassung (24, 25, 26) an einer Rückwand (11) des Garraums (10), welche eine Versorgung der Heizeinrichtung (40) mit elektrischer Energie gestattet, wenn diese mit den Anschlüssen (44) verbunden ist;
**dadurch gekennzeichnet ,**
**dass** die Heizeinrichtung (40) aufweist:
einen leitenden Film (41), der auf einer Unterseite des Tabletts (30) beschichtet ist; und
eine erste und eine zweite Elektrode (42, 43), die einander gegenüberliegen und mit dem leitenden Film (41) verbunden sind, wobei sich der leitende Film (41) aufgrund eines durch den leitenden Film (41) zwischen der ersten und der zweiten Elektrode (42, 43) fließenden elektrischen Stroms erwärmt.

2. Kochgerät nach Anspruch 1,
wobei die erste und die zweite Elektrode (42, 43) jeweils in einem mittigen Teil geteilt sind, wobei die geteilten Elektrodensegmente voneinander beabstandet angeordnet und mit einem leitenden Draht verbunden sind, um zu verhindern, dass ein mittiger Bereich des leitenden Films (41) stärker erwärmt wird als ein außen liegender Bereich.

3. Kochgerät nach Anspruch 1 oder Anspruch 2,
wobei die erste und die zweite Elektrode jeweils bogenförmig geformt sind, um zu verhindern, dass ein mittiger Bereich des leitenden Films (41) stärker als ein äußerer Bereich erwärmt wird.

4. Kochgerät nach einem der vorhergehenden Ansprüche,
wobei:
das Paar von Anschlüssen (44) an einer Seite des Tabletts (30) angeordnet ist, so dass innere Enden der Anschlüsse (44) mit der ersten und der zweiten Elektrode verbunden sind und äußere Enden der Anschlüsse (44) nach außen von dem Tablett (30) vorstehen; und
wenn das Tablett (30) in den Garraum (10) entlang der Trageschienen (21, 22, 23) geschoben wird, wird das Paar von Anschlüssen (44) in die zu den Trageschienen (21, 22, 23) gehörende Fassung (24, 25, 26) eingeführt, so dass das Tablett (30) durch elektrischen Stromfluss durch den leitenden Film (41) zwischen der ersten und der zweiten Elektrode erwärmt wird.

5. Kochgerät nach Anspruch 4,
wobei:
beide Anschlüsse (44), abgesehen von dem äußeren Ende, von einer Isolierhülle (46) umgeben sind; und
die Unterseiten des Tabletts (30) und der Deckplatte (50) jeweils ein Paar von Rillen (35, 51) aufweisen, um ein Paar von Löchern festzulegen, in denen das Paar von Anschlüssen (44) aufgenommen wird.

6. Kochgerät nach Anspruch 5,
wobei in den Rillen des Tabletts (30) und der Abdeckplatte (50) Dichtungsmaterial angebracht ist, um zu verhindern, dass Feuchtigkeit in die Heizeinrichtung (40) eindringt.

7. Kochgerät nach einem der Ansprüche 1 bis 6,
wobei die Unterseite des Tabletts (30) mit einer Abdeckplatte (50) bedeckt ist, um zu verhindern, dass die mit dem Tablett (30) verbundene Heizeinrichtung (40) ausgesetzt ist.

8. Kochgerät nach einem der Ansprüche 1 bis 7,
wobei:
das wenigstens eine Paar von Trageschienen (21, 22, 23) eine Mehrzahl von Paaren von Trageschienen (21, 22, 23) beinhaltet, welche an beiden Seitenwänden (12, 13) des Garraums (10) vertikal voneinander beabstandet sind; und
die wenigstens eine Fassung (24, 25, 26) eine Mehrzahl von Fassungen (24, 25, 26) beinhaltet, welche an der Rückwand (11) des Garraums (10) so angeordnet sind, dass sie den Positionen der Mehrzahl von Paaren von Trageschienen (21, 22, 23) entsprechen.

9. Kochgerät nach Anspruch 8,
das weiter eine obere Heizeinrichtung (4) aufweist, welche an einem oberen Teil der Rückwand (11) des Garraums (10) angeordnet ist zum Garen von Lebensmitteln in Zusammenwirkung mit der an dem Tablett (30) vorgesehenen Heizeinrichtung (40).

10. Kochgerät nach Anspruch 8 oder 9,
wobei jede der Mehrzahl von Fassungen (24, 25, 26) einen Mikroschalter (60) beinhaltet, welcher an- und ausgeschaltet wird, wenn die Anschlüsse (44) in eine entsprechende Fassung (24, 25, 26) eingeführt und von dieser getrennt werden, um den an die Heizeinrichtung (40) gelieferten elektrischen Strom zu steuern durch Feststellung, in welche der Fassungen (24, 25, 26) die Heizeinrichtung (40) eingeführt ist.

11. Kochgerät nach einem der vorhergehenden Ansprüche,
wobei das Tablett (30) eine Bodenplatte (31) und eine Seitenwand (32) aufweist, welche sich von einer Außenkante der Bodenplatte (31) erstreckt, und wobei die Heizeinrichtung (40) an einer Unterseite der Bodenplatte (31) angeordnet ist.

12. Kochgerät nach Anspruch 11,
welche weiterhin eine Grillplatte (70) aufweist, welche auf einem oberen Ende des Tabletts (30) positioniert ist,
wobei die Seitenwand (32) des Tabletts (30) in einer bestimmten Höhe einer ihrer Innenflächen einen gestuften Teil (36) aufweist, wobei die Lebensmittel durch Dampf gegart werden, wenn die Heizeinrichtung (40) aktiviert und das Tablett (30) mit Wasser gefüllt ist.

13. Kochgerät nach Anspruch 1,
wobei der Garraum (10) im Wesentlichen rechtwinklig ist;
die Heizeinrichtung (40) ein Heizelement (40) ist;
das Kochgerät ein Heizsystem aufweist, welches die wenigstens eine Fassung (24, 25, 26) an einer bestimmten, einer gewünschten Garposition entsprechenden Stellung innerhalb des Garraums (10) umfasst, wobei die Fassung (24, 25, 26) mit dem Paar von Anschlüssen (44) zusammenwirkt, um das Heizelement (40) mit Energie zu versorgen;
wobei das Kochgerät ein Tragesystem (21, 22, 23) aufweist mit dem Paar von Trageschienen (21, 22, 23), welche das Heizelement (40) in einer der Position der Fassung (24, 25, 26) entsprechenden Stellung trägt;
wobei der leitende Film (41) so angeordnet ist, dass er eine Unterseite des Heizelements (40) abdeckt, so dass das Heizelement (40) direkt mit dem Tablett (30) verbunden ist, damit das Tablett (30) von selbst Wärme generiert, um darauf angeordnete Lebensmittel zu garen.

14. Kochgerät nach Anspruch 13,
wobei das Heizelement (40) eine erste und eine zweite Elektrode (42, 43) aufweist, die mit dem leitenden Film (41) verbunden sind.

15. Kochgerätelement nach Anspruch 13 oder 14,
wobei die erste und die zweite Elektrode (42, 43) einander gegenüberliegen.

16. Kochgerätelement nach Anspruch 14 oder 15,
wobei durch den leitenden Film (41) zwischen der ersten und der zweiten Elektrode (42, 43) fließender elektrischer Strom den leitenden Film (41) erwärmt.

17. Kochgerätelement nach Anspruch 14, 15 oder 16,
wobei die erste und die zweite Elektrode (42, 43) jeweils an einem mittigen Teil geteilt sind.

18. Kochgerätelement nach Anspruch 17,
wobei die geteilten Elektrodensegmente voneinander getrennt angeordnet und mit einem leitenden Draht verbunden sind.

19. Kochgerätelement nach einem der Ansprüche 14 bis 18,
wobei die erste und die zweite Elektrode (42, 43) jeweils nach außen zu einer Bogenform gebogen sind.

20. Kochgerätelement nach einem der Ansprüche 14 bis 19,
wobei innere Enden der Anschlüsse (44) mit der ersten beziehungsweise der zweiten Elektrode (42, 43) verbunden sind und äußere Enden der Anschlüsse (44) nach außen vorstehen.

21. Kochgerätelement nach Anspruch 20,
wobei die Anschlüsse (44) mit den Fassungen (24, 25, 26) zusammenwirken, um den leitenden Film (41) mit Energie zu versorgen, wenn das Heizelement (40) durch das Tragesystem (21, 22, 23) getragen ist.

22. Kochgerät nach Anspruch 21,
wobei die Anschlüsse (44), abgesehen von den äußeren Enden der Anschlüsse (44), von Isolierhüllen (46) umgeben sind.

23. Kochgerät nach Anspruch 22,
das weiter aufweist:
ein Paar von halbkreisförmigen Rillen in Positionen auf der Unterseite des Heizelements (40); und
eine Abdeckplatte (50), welche eine Unterseite des Heizelements (40) abdeckt, wobei die Abdeckplatte (50) ein Paar von halbkreisförmigen Rillen in Positionen aufweist, welche den Positionen der Rillen auf der Unterseite des Heizelements (40) entsprechen, wobei die Rillen auf der Unterseite des Heizelements (40) und die Rillen in der Abdeckplatte (50) die Isolierhüllen (46) aufnehmen.

24. Kochgerät nach Anspruch 23,
das weiterhin ein in den Rillen in der Unterseite des Heizelements (40) und den Rillen in der Abdeckplatte (50) angebrachtes Dichtungsmaterial aufweist, um zu verhindern, dass Feuchtigkeit in die Heizeinrichtung (40) eindringt.

25. Kochgerät nach einem der Ansprüche 13 bis 24,
wobei das Tragesystem (21, 22, 23) eine Vielzahl von Paaren von Trageschienen (21, 22, 23) aufweist, die voneinander vertikal beabstandet sind.

26. Kochgerät nach Anspruch 25,
wobei eine Mehrzahl von Fassungen (24, 25, 26) vorhanden ist und die Positionen der Fassungen (24, 25, 26) den vertikalen Positionen der Trageschienen (21, 22, 23) entsprechen.

27. Kochgerät nach Anspruch 26,
das weiterhin eine obere Heizeinrichtung (4) aufweist, die an einem oberen Teil der Rückwand (11) des rechtwinkligen Garraums angeordnet ist.

28. Kochgerät nach Anspruch 26 oder 27,
wobei die Fassungen (24, 25, 26) Mikroschalter aufweisen, welche anschalten, wenn die Fassungen (24, 25, 26) mit den Anschlüssen (44) zusammenwirken, und ausschalten, wenn die Fassungen (24, 25, 26) nicht mit den Anschlüssen (44) zusammenwirken.

29. Kochgerät nach einem der Ansprüche 13 bis 28,
wobei das Heizelement (40) aufweist:
eine Bodenplatte (31) und eine Seitenwand (32), welche sich von einer Außenkante der Bodenplatte (31) erstreckt, und einen leitenden Film (41) auf einer Unterseite der Bodenplatte (31).

30. Kochgerät nach Anspruch 29,
wobei das Heizelement (40) eine Grillplatte (70) auf einer Oberseite des Heizelements (40) aufweist, wobei die Seitenwand (32) des Tabletts (30) bei einer bestimmten Höhe ihrer Innenseite einen gestuften Teil (36) aufweist,
wobei, wenn das Heizelement (40) aktiviert und Nahrungsmittel auf dem Grillteller (70) angeordnet wird, die Nahrungsmittel gegart werden durch Dampf, der aus dem in dem Tablett (30) vorhandenen Wasser erzeugt wird.

## Revendications

1. Appareil de cuisson comprenant:
- une cavité de cuisson (10);
- au moins une paire de rails de support (21, 22, 23) compris respectivement sur les deux parois latérales (12, 13) de la cavité de cuisson (10);
- un plateau (30) sur lequel les aliments sont placés;
- un dispositif de chauffage (40) pour chauffer directement le plateau (30) pour cuisiner les aliments par activation du dispositif de chauffage (40), présentant une paire de bornés (44); et
- au moins une prise femelle (24, 25, 26) comprise sur une paroi latérale (11) de la cavité de cuisson (10) permettant d'alimenter électriquement le dispositif de chauffage (40) lorsqu'elle est connectée aux bornes (44);
**caractérisé en ce que**:
- le dispositif de chauffage (40) comprend:
- une couche conductrice (41) revêtant une surface inférieure du plateau (30); et
- des première et seconde électrodes opposées l'une de l'autre (42, 43) connectées à la couche conductrice (41), la couche conductrice (41) chauffant sous l'effet d'un courant électrique circulant à travers la couche conductrice (41) entre les première et seconde électrodes (42, 43).

2. Appareil de cuisson selon la revendication 1, dans lequel chacune des première et seconde électrodes (42, 43) est divisée dans la partie centrale de celle-ci, les segments d'électrodes séparés étant espacés l'un de l'autre d'une distance, avec un fil conducteur connecté entre eux, pour éviter que la zone centrale de la couche conductrice (41) ne soit chauffée davantage que la zone périphérique de celle-ci.

3. Appareil de cuisson selon la revendication 1 ou 2, dans lequel chacune des première et seconde électrodes présente une forme arquée, pour éviter que la zone centrale de la couche conductrice (41) ne soit chauffée davantage que la zone périphérique de celle-ci.

4. Appareil de cuisson selon l'une quelconque des revendications précédentes, dans lequel:
- la paire de bornes (44) est positionnée sur un côté du plateau (30) de telle sorte que les extrémités internes des bornes (44) sont connectées aux première et seconde électrodes, et que les extrémités externes des bornes (44) font saillie vers l'extérieur depuis le plateau (30); et
- lorsque le plateau (30) est poussé dans la cavité de cuisson (10) le long des rails de support (21, 22, 23), la paire de bornes (44) est insérée dans la prise femelle (24, 25, 26) correspondant aux rails de support (21, 22, 23), pour permettre au plateau (30) d'être chauffé par un courant électrique circulant à travers la couche conductrice (41) entre les première et seconde électrodes.

5. Appareil de cuisson selon la revendication 4, dans lequel:
- chacune de la paire de bornes (44), à l'exception de son extrémité externe, est entourée d'une gaine isolante (46); et
- les surfaces inférieures du plateau (30) et la plaque de couverture (50) comprennent une paire de rainures (35, 51), respectivement, pour définir une paire de trous, dans lesquels la paire de bornes (44) est reçue.

6. Appareil de cuisson selon la revendication 5, dans lequel un matériau isolant est appliqué sur les rainures du plateau (30) et de la plaque de couverture (50) pour éviter l'infiltration d'humidité dans le dispositif de chauffage (40).

7. Appareil de cuisson selon l'une quelconque des revendications 1 à 6, dans lequel la surface inférieure du plateau (30) est couverte d'une plaque de couverture (50) de façon à éviter que le dispositif de chauffage (40) fixé au plateau (30) ne soit à découvert.

8. Appareil de cuisson selon l'une quelconque des revendications 1 à 7, dans lequel:
- la au moins une paire de rails de support (21, 22, 23) comprend une pluralité de paires de rails de support (21, 22, 23), qui sont positionnés sur les deux parois latérales (12, 13) de la cavité de cuisson (10) pour être espacés verticalement l'un de l'autre d'une distance; et
- la au moins une prise femelle (24, 25, 26) comprend une pluralité de prises femelles (24, 25, 26), qui sont positionnées sur la paroi arrière (11) de la cavité de cuisson (10) pour correspondre aux positions de la pluralité de paires de rails de support (21, 22, 23).

9. Appareil de cuisson selon la revendication 8, comprenant en outre un dispositif de chauffage supérieur (4) fixé sur une partie supérieure de la paroi arrière (11) de la cavité de cuisson (10) pour cuire des aliments en conjonction avec le dispositif de chauffage (40) monté au niveau du plateau (30).

10. Dispositif de chauffage selon la revendication 8 ou 9, dans lequel chacune de la pluralité de prises femelles (24, 25, 26) comprend un micro-interrupteur (60) qui est activé et désactivé lorsque les bornes (44) sont insérées dans, et extraites de, une prise correspondante parmi les prises femelles (24, 25, 26), de façon à contrôler le courant électrique alimentant le dispositif de chauffage (40), en enregistrant dans quelle prise femelle (24, 25, 26) le dispositif de chauffage (40) est inséré.

11. Appareil de cuisson selon l'une quelconque des revendications précédentes, dans lequel le plateau (30) comprend une plaque de fond (31) et une paroi latérale (32) s'étendant vers le haut depuis un bord périphérique de la plaque de fond (31), et le dispositif de chauffage (40) est positionné sur une surface inférieure de la plaque de fond (31).

12. Appareil de cuisson selon la revendication 11, comprenant en outre une plaque de gril (70) placée sur une extrémité supérieure du plateau (30), dans lequel la paroi latérale (32) du plateau (30) comprend une partie surélevée (36) à une hauteur prédéterminée d'une surface intérieure de celle-ci, sur laquelle, lorsque le dispositif de chauffage (40) est activé et que le plateau (30) est empli d'eau, la vapeur cuit les aliments.

13. Appareil de cuisson selon la revendication 1, dans lequel:
- la cavité de cuisson (10) est sensiblement rectangulaire;
- le dispositif de chauffage (40) est un élément chauffant (40);
- l'appareil de cuisson inclut un système de chauffage comprenant la au moins une prise femelle (24, 25, 26) à un certain emplacement à l'intérieur de la cavité de cuisson (10) correspondant à une position souhaitée de cuisson, la prise femelle (24, 25, 26) pouvant coopérer avec la paire de bornes (44) pour alimenter l'élément chauffant (40);
- l'appareil de cuisson incluant un système de support (21, 22, 23) comprenant la paire de rails de supports (21, 22, 23) qui supporte l'élément chauffant (40) à un emplacement correspondant à la position de la prise femelle (24, 25, 26);
- la couche conductrice (41) étant disposée pour revêtir une surface inférieure de l'élément chauffant (40) de telle sorte que l'élément chauffant (40) est fixé directement sur le plateau (30) pour permettre au plateau (30) de générer de la chaleur en lui-même pour cuire les aliments placés sur celui-ci.

14. Appareil de cuisson selon la revendication 13, dans lequel l'élément chauffant (40) comprend les première et seconde électrodes (42, 43) connectées à la couche conductrice (41).

15. Appareil de cuisson selon la revendication 13 ou 14, dans lequel les première et seconde électrodes (42, 43) sont opposées l'une à l'autre.

16. Appareil de cuisson selon la revendication 14 ou 15, dans lequel le courant électrique circulant à travers la couche conductrice (41) entre les première et seconde électrodes (42, 43) chauffe la couche conductrice (41).

17. Appareil de cuisson selon la revendication 14, 15 ou 16, dans lequel chacune des première et seconde électrodes (42, 43) est divisée dans sa partie centrale.

18. Appareil de cuisson selon la revendication 17, dans lequel les segments d'électrodes séparés sont espacés l'un de l'autre et comprennent un fil conducteur connecté entre eux.

19. Appareil de cuisson selon l'une quelconque des revendications 14 à 18, dans lequel chacune des première et seconde électrodes (42, 43) est recourbée vers l'extérieur pour présenter une forme arquée.

20. Appareil de cuisson selon l'une quelconque des revendications 14 à 19, dans lequel les extrémités internes des bornes (44) sont connectées aux première et seconde électrodes (42, 43), respectivement, et les extrémités externes des bornes (44) font saillie vers l'extérieur.

21. Appareil de cuisson selon la revendication 20, dans lequel, lorsque l'élément chauffant (40) est supporté par le système de support (21, 22, 23), les bornes (44) coopèrent avec la prise femelle (24, 25, 26) pour alimenter la couche conductrice (41).

22. Appareil de cuisson selon la revendication 21, dans lequel les bornes (44), à l'exception de l'extrémité externe des bornes (44), sont entourées de gaines isolantes (46).

23. Appareil de cuisson selon la revendication 22, comprenant en outre:
- une paire de rainures semi-circulaires à des emplacements de la surface inférieure de l'élément chauffant (40); et
- une plaque de couverture (50) couvrant une surface inférieure de l'élément chauffant (40), la plaque de couverture (50) comprenant une paire de rainures semi-circulaires à des emplacements correspondant aux positions des rainures dans la surface inférieure de l'élément chauffant (40), les rainures dans la surface inférieure de l'élément chauffant (40) et les rainures dans la plaque de couverture (50) recevant les gaines isolantes (46).

24. Appareil de cuisson selon la revendication 23, comprenant en outre un matériau isolant appliqué sur les rainures de l'élément chauffant (40) et les rainures dans la plaque de couverture (50) pour éviter l'infiltration d'humidité dans le dispositif de chauffage (40).

25. Appareil de cuisson selon l'une quelconque des revendications 13 à 24, dans lequel le système de support (21, 22, 23) comprend une pluralité de rails de support (21, 22, 23) espacés verticalement l'un de l'autre d'une distance.

26. Appareil de cuisson selon la revendication 25, dans lequel la prise femelle (24, 25, 26) est multiple et les positions des prises femelles (24, 25, 26) correspondent aux positions verticales des rails de support (21, 22, 23).

27. Appareil de cuisson selon la revendication 26, comprenant en outre un dispositif de chauffage supérieur (4) fixé sur une partie supérieure de la paroi arrière (11) de l'espace de cuisson rectangulaire.

28. Appareil de cuisson selon la revendication 26 ou 27, dans lequel les prises femelles (24, 25, 26) comprennent des micro-interrupteurs qui sont activés lorsque les prises femelles (24, 25, 26) coopèrent avec les bornes (44), et désactivés lorsque les prises femelles (24, 25, 26) ne coopèrent pas avec les bornes (44).

29. Appareil de cuisson selon l'une quelconque des revendications 13 à 28, dans lequel l'élément chauffant (40) comprend:
- une plaque de fond (31) et une paroi latérale (32) s'étendant vers le haut depuis un bord périphérique de la plaque de fond (31), et une couche conductrice (41) sur une surface inférieure de la plaque de fond (31).

30. Appareil de cuisson selon la revendication 29, dans lequel l'élément chauffant (40) comprend une plaque de gril (70) sur une extrémité supérieure de l'élément chauffant (40), dans lequel la paroi latérale (32) du plateau (30) comprend une partie surélevée (36) à une hauteur prédéterminée de sa surface intérieure, sur laquelle, lorsque le dispositif de chauffage (40) est activé et que des aliments sont placés sur la plaque de grille (70), la vapeur générée depuis l'eau contenue dans le plateau (30) cuit les aliments.
